# EUROPEAN PATENT APPLICATION

(11) **EP 2 533 544 A1**
(43) Date of publication of application: **12.12.2012**
(21) Application number: 11785985.0
(22) Date of filing: 24.02.2011
(51) Int. Cl.: H04N 21/2381

(54) **METHOD AND SYSTEM FOR IMPLEMENTING MESSAGE SERVICE IN INTERACTIVE IPTV**

(30) Priority: 25.05.2010 CN 201010186686
(71) Applicant: ZTE Corporation, Shenzhen, Guangdong 518057 (CN)
(72) Inventor: XU, Shaoping, Guangdong 518057 (CN); CHENG, Shenliang, Guangdong 518057 (CN); KONG, Jianhua, Guangdong 518057 (CN)
(74) Representative: Adams, James
(86) International application number: PCT/CN2011/071270
(87) International publication number: WO 2011/147213

(57) **Abstract**

The present invention discloses a method and system for implementing message services of an interactive Internet Protocol television (IPTV), wherein, an IPTV message system receives message from an IPTV system and/or an external network element system, and according to user information and whether a set top box user is in a power-on state, forwards the received message to a set top box corresponding to the user information or a receiving terminal bound to the set top box user. If the set top box is not in the power-on state, whether the set top box user has other terminal binding services is further judged, if not, an offline email is sent to the set top box user; if yes, the message are sent to the other terminals bound to the set top box user, and the message made by the system are displayed on the other terminals. In the present invention, service and function expansion is performed on aspects of message sources and receiving terminals and so on, and services of the IPTV system are enriched.

## Description

### Technical Field

The present invention relates to interactive Internet Protocol television (IPTV) technology, and particularly, to a method and system for implementing message services in an IPTV.

### Background of the Related Art

IPTV is a new technology which uses a broadband network as the infrastructure, uses a home-use television or personal computer as a major display terminal, uses a series of encoded and compressed multimedia digital signals borne and transmitted by the internet protocol to provide multiple kinds of interactive digital multimedia services including TV programs and value added services for home subscribers. People can enjoy IPTV services in various ways such as Personal Computers (PC), set top box plus television, multimedia cellphones (used for mobile IPTVs) and so on. From a user perspective, different from non-interactive broadcast services of a traditional television, the IPTV services can provide personalized and real-time interactive programming services.

In the existing IPTV system, message services are established on an IPTV system platform, a message content source sends a message sending request to the IPTV system, and the message sending request includes system message related to service contents; services of the message can be divided into several types such as terminal to terminal, terminal to application and application to terminal and so on.

However, at present, a way of the IPTV system sending/receiving message is only limited to interior of the IPTV system, the receiving way is also only limited to the set top box terminal receiving, and which has shortcomings on the aspects of expansibility and instantaneity etc..

### Summary of the Invention

The technical problem required to be solved by the present invention is a method and system for implementing message services in an IPTV, to solve problems that message sources are simplex and a receiving mode is confined to online receiving of set top box and so on.

In order to solve the above problem, the present invention provides a system for implementing message services of an interactive Internet Protocol television (IPTV), which comprises: an IPTV system and one or more external network element systems, a set top box, one or more receiving terminals bound to a set top box user, and an IPTV message system, wherein:
the IPTV message system is configured to: receive message from the IPTV system and/or external network element system, and according to user information and whether the set top box user is in a power-on state, forward the received message to the set top box corresponding to the user information or to the receiving terminal bound to the set top box user.

Preferably, the external network element system is an emergency notification system, an interactive application system, an advertisement system or a TVMail system.

Preferably, the receiving terminal bound to the set top box user is a personal computer or a cellphone.

Preferably, the IPTV message system comprises:
a message system management system, configured to: designate a message policy and release a time policy, receive the message from the IPTV system and/or external network element system, complete a formation of primitive property and content information of the message, and define a message sending interface and a message file format;
a message system server, configured to: receive, parse and execute a message task from the message management system, and generate a webpage file containing the message property to send to a message system gateway;
the message system gateway, configured to: receive the message parsed by the message system server, and according to the message property and a sending rule, respond to a message display request of the set top box or the terminal bound to the user;
a web server, configured to: acquire a message display page file from the message system server synchronously, and when the set top box or terminal bound to the user requests for message display, complete the display of a user information page; and
a terminal management system, configured to: after the message system management system issues the message, send address information of the message system gateway to the set top box, judge whether the set top box is in the power-on state, and according to a judging result, control the message system gateway to send the message to the set top box or other terminals bound to the user.

Preferably, the message system management system is configured to: by sending a message sending notification to the message system server, indicate the message system server to send the message, wherein, the message sending notification includes a message name, a sending time, a failure time and a resource file.

Preferably, the message system server is further configured to: according to the result of parsing the message, send display time and display location information of newly created message to the message system gateway.

Preferably, the terminal management system is further configured to: when judging whether the set top box is in the power-on state,
if the set top box is in the power-on state is judged, request the message system gateway for acquiring the message; and the message system gateway retrieves and sends all message conforming to the set top box to the set top box; the set top box displays the message received from the message system gateway;
if the set top box is not in the power-on state is judged, further judge whether the set top box user has bound the services of the other terminals; if not, the message system gateway sends an offline mail to the set top box user; if yes, the terminal management system sends request message to the message system gateway, the message system gateway sends the message to the other terminals bound to the set top box user, and the message made by the system are displayed on the other terminals.

Preferably, the terminal management system is further configured to: when determining that the set top box user is power off and bound with other terminals, acquire detail information of the set top box user, wherein the detail information of the user includes: a user ID and other terminal numbers; the terminal management system is configured to: after acquiring the detail information of the user, process the detail information of the user, and generate the webpage file containing the message property; the message system gateway is further configured to:
receive the webpage file containing the message property generated according to the detail information of the user from the terminal management system, parse the received message and send the received message to the other terminals bound to the user.

The present invention further provides a method for implementing message services of an interactive Internet Protocol television (IPTV), which comprises:
an IPTV message system receiving message from an IPTV system and/or an external network element system, and according to user information and whether a set top box user is in a power-on state, forwarding the received message to a set top box corresponding to the user information or a receiving terminal bound to the set top box user.

Preferably, the external network element system is an emergency notification system, an interactive application system, an advertisement system or a TVMail system; and the receiving terminal bound to the set top box user is a personal computer or a cellphone.

Preferably, the step of the IPTV message system forwarding the received message to a set top box corresponding to the user information or a receiving terminal bound to the set top box user according to user information and whether a set top box user is in a power-on state comprises:
judging whether the set top box is in the power-on state, and if the set top box is in the power-on state, retrieving and sending all message conforming to the set top box to the set top box;
if the set top box is not in the power-on state, judging whether the set top box user has other terminal binding services, if not, sending an offline mail to the set top box user; if yes, sending the message to the other terminals bound to the set top box user, and displaying the message made by the system on the other terminals.

Preferably, when determining that the set top box user is power off and bound with other terminals, a terminal management system acquires detail information of the set top box user, wherein the detail information of the user includes: a user ID and other terminal numbers; and informs a message system gateway of the detail information of the user, and the message system gateway sends the message to the other terminals corresponding to the other terminal numbers in the detail information of the user.

An interactive Internet Protocol television (IPTV) message system is configured to:
receive message from an IPTV system and/or an external network element system, and according to user information and whether a set top box user is in a power-on state, forward the received message to a set top box corresponding to the user information or a receiving terminal bound to the set top box user.

Preferably, the IPTV message system comprises:
a message system management system, configured to: designate a message policy and release a time policy, receive the message from the IPTV system and/or external network element system, complete a formation of primitive property and content information of the message, and define a message sending interface and a message file format;
a message system server, configured to: receive, parse and execute a message task from the message system management system, and generate a webpage file containing a message property to send to a message system gateway;
the message system gateway, configured to: receive the message parsed by the message system server, and according to the message property and a sending rule, respond to a message display request of the set top box or the terminal bound to the user;
a web server, configured to: acquire a message display page file from the message system server synchronously, and when the set top box or terminal bound to the user requests for message display, complete the display of a user message page; and
a terminal management system, configured to: after the message system management system releases the message, send address information of the message system gateway to the set top box, judge whether the set top box is in the power-on state, and according to a judging result, control the message system gateway to send the message to the set top box or other terminals bound to the user.

Preferably, the message system management system is configured to: by sending a message sending notification to the message system server, indicate the message system server to send the message, and the message sending notification includes a message name, a sending time, a failure time and a resource file.

Preferably, the message system server is further configured to: according to results of parsing the message, send display time and display location information of newly created message to the message system gateway.

Preferably, the terminal management system is further configured to: when judging whether the set top box is in the power-on state:
if the set top box is in the power-on state is judged, request the message system gateway for acquiring the messages; and the message system gateway retrieves and sends all message conforming to the set top box to the set top box; the set top box displays the message received from the message system gateway;
if the set top box is not in the power-on state is judged, further judge whether the set top box user has other terminal binding services; if not, the message system gateway sends an offline mail to the set top box user; if yes, the terminal management system sends request message to the message system gateway, the message system gateway sends the message to the other terminals bound to the set top box user, and the message made by the system are displayed on the other terminals.

Preferably, the terminal management system is further configured to: when determining that the set top box user is power off and bound with other terminals, acquire detail information of the set top box user, wherein the detail information of the user includes: a user ID and other terminal numbers;
the terminal management system is configured to: after acquiring the detail information of the user, process the detail information of the user, and generate the webpage file containing the message property; and
the message system gateway is further configured to: receive the webpage file containing the message property generated according to the detail information of the user from the terminal management system, parse the received message and send the received message to the other terminals bound to the user.

With the method and system for implementing message services of the IPTV of the present invention, when a management side or a user side interacts with its application/users, instant message sending between the system and user can be implemented by binding a set top box mailbox and cellphone/other terminals to the set top box user. In the present invention, the service and function expansion is performed on aspects of message sources and receiving terminals and so on, and the services of the IPTV system are enriched.

### Brief Description of Drawings

FIG. 1 is a schematic diagram of a network connection in an IPTV message system.
FIG. 2 is a schematic diagram of a module structure in an IPTV message system.
FIG. 3 is a flow chart of implementing message releasing in an IPTV message system.
FIG. 4 is a flow chart of a set top box acquiring message.
FIG. 5 is a flow chart of message interaction between the terminal management system and the message system gateway.

### Preferred Embodiments of the Present Invention

In order to make the object, technical scheme and advantages of the present invention more clear, the present invention will be further described in detail in combination with the accompanying drawings below.

In the present invention, with regard to a situation of insufficient expansibility and instantaneity of message services in the existing IPTV system, message sources are expanded and not just limited to interior of the IPTV system any more, and message can be derived from multiple external network elements; the receiving of the message is also not limited to a set top box terminal any more, and the message can be received through various terminal-binding-modes. According to a state of a user Set Top Box (STB), the system message can be acquired by a user in various ways:
when the user set top box is in an application running state, displaying the message on a set top box page or through a video; when the user set top box is in an offline state, sending the message to a set top box mail of the user; when the user set top box is in the offline state and the user customizes other terminal binding services, sending the message to the bound user terminals by using a mode of sending to the other bound terminals.

In the present invention, by expanding the message sources and receiving terminals, the message is received with the mode of binding various terminals, which can fully implement interaction with users and enhance user experience.

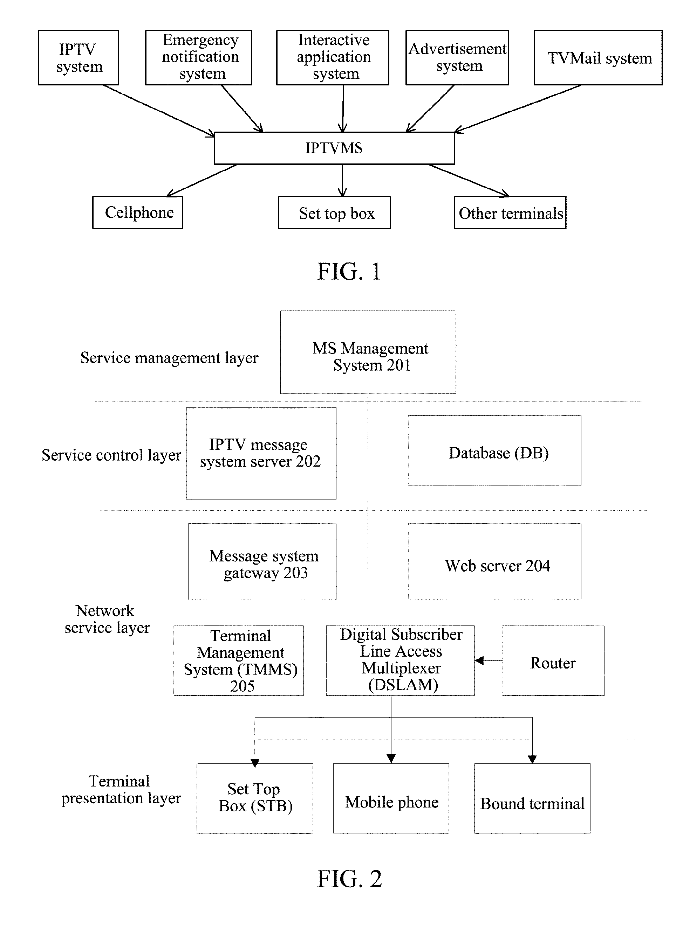

As shown in FIG. 1, a schematic diagram of a connection between an IPTV Message System (IPTVMS) and message source terminals and receiving terminals according to the present invention is displayed.

On one hand, the IPTV message system receives the message from an IPTV system or an external network element access system (such as an emergency notification system, an interactive application system, an advertisement system and a TVMail system). The access of the external message can be performed through a message access interface by the IPTV message system and external network elements. For the IPTV message system, since the message access to the external network elements is increased, it is required to satisfy requirements of multiple application systems, thus the sources of IPTV message are expanded, an external system also can achieve the purpose of sending the message to terminal users by accessing the IPTVMS, and expand service applications.

On the other hand, the IPTV message system releases the received message through an IP network and pushes the message to a user terminal, the user terminal also can be a cellphone, or other receiving terminals bound to the user besides the user set top box in the existing IPTV system.

For example, during the Olympic Games, in order to implement the spirit of Olympic interaction and participation, operators can make various message releasing policies such as game recommendation, guess and vote and so on, use the IPTVMS to input the above message to display to IPTV users, and send the message to the set top box, the cellphone or the other bound terminals, thus the user can experience all-around Olympic information inquiry and convenient services.

The IPTVMS shown in FIG. 1 not only accepts internal message of the IPTV system, but also can implement the message sending by the external network elements accessing the IPTVMS through an external interface machine.

For example, the State Seismological Bureau needs to release an emergent earthquake notice, if a conventional releasing way is followed, firstly the emergent earthquake notice should be sent to various different television operators, and then each operator releases the emergent earthquake notice through a management system. According to the above existing conventional practice, since it is required to go through the processing of more intermediate links, the processing time increases inevitably, thereby losing much time and making information be released not in time. Now, the IPTVMS can be connected with the seismological bureau through the interface machine, and the seismological bureau can directly and automatically send the information to each user terminal through its own interface system, thus the processing of intermediate links can be omitted.

With respect to the IPTVMS shown in FIG. 1, the process of sending and receiving message in the IPTV system is taken as an example to perform a detailed description below, and other external systems also can be implement with similar ways, which will not be repeated here.

FIG. 2 is a structure diagram of the IPTV Message System (IPTVMS) in the example. The IPTV message system includes:
a message system management system (MS Management System) 201, which is a message sending service management system, wherein the operators complete the formation of the related information, such as primitive property and content, of the message through various message policies designated by the management system in advance and releasing time schedule polices. A message sending interface and a message file format are defined. MS Management System is generally deployed on one PC server separately;
a message system sever (IPTVMS Server) 202, which is a core component of the IPTVMS, and mainly receives, parses and executes a message task from the message system management system, wherein the IPTVMS Server and a Database (DB) are set on one ATAE single board together;
a message system gateway (MS Gateway) 203, which is mainly used to receive the message parsed by the IPTVMS Server 202 and respond to a message display request of the Set Top Box (STB) according to a message property and a sending rule, wherein the MS Gateway 203 and a Web Server 204 are set on one ATAE single board together;
the Web Server 204, which is a message page display server, acquires a message display page file from the IPTVMS Server synchronously, and when the STB requests for message display, completes the display of a user message page, wherein the specific number of the message is determined according to the number of online users;
a Terminal Management System (TMMS) 205, which is used to judge a working state of the set top box, and after the message management system releases the message, control the message system gateway to send the message to the set top box or terminal bound to the user according to the working state of the set top box.

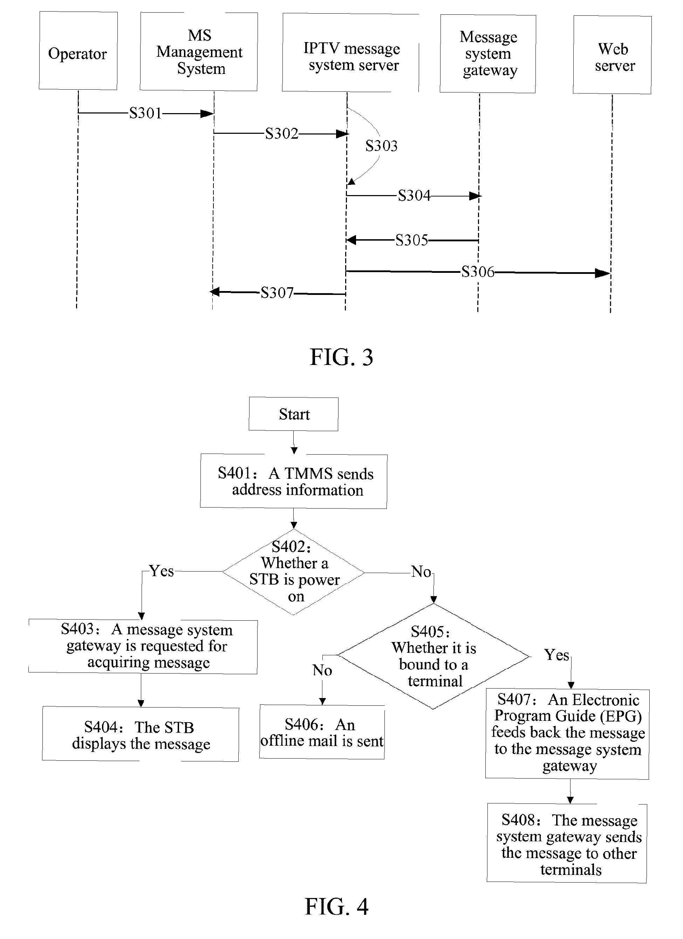

As shown in FIG. 3, a flow chart of implementing message releasing in the IPTV message system of the present invention is displayed, and following steps are included.

In step S301, an Operator creates and releases message in an MS Management System, the released message also can be accessed by a third-party system directly through an interface machine connected with the message management system, for example, a seismological bureau directly accesses the message required to be released through the interface machine connected with the message management system.

In step S302, the MS Management System sends a message sending notification to an IPTVMS Server to indicate the IPTVMS Server to send the message, and the message sending notification includes message description information such as a message name, a sending time, a failure time and a resource file and so on.

In step S303, the IPTVMS Server parses the message sending notification, and generates a webpage file containing a message property (e.g. an xml file).

In step S304, the IPTVMS Server sends the message description information such as display time and display location information of newly created message to an MS Gateway.

In step S305, the MS Gateway returns receiving success message to the IPTVMS Server.

In step S306, the IPTVMS Server synchronizes message content entity information to a Web Server.

In step S307, the IPTVMS Server returns message sending task execution success information to the MS Management System.

As shown in FIG. 4, a flow chart of a user Set Top Box (STB) acquiring message (i.e. message receiving) is displayed, and following steps are included.

In step S401, after an MS Management System releases message, a Terminal Management System (TMMS) sends address information of an MS Gateway to the set top box.

In step S402, the TMMS judges whether the set top box is in a power-on state, if yes, it is to proceed to step S403, and if not, it is to proceed to step S405.

In the step, a mode of heartbeat of the set top box can be used to judge the state of the set top box, in the current IPTV system, the set top box will feed back heartbeats to the Terminal Management System (TMMS) periodically, and if a preset time is expired and the set top box does not feed back the heartbeats, the Terminal Management System (TMMS) considers that the set top box user is not online.

In step S403, if the TMMS judges that the set top box is in the power-on state, the TMMS synchronizes information of the Set Top Box (STB) according with a sending condition to the MS Gateway, the MS Gateway retrieves and sends the message to the STB user synchronized from the TMMS, and it is to proceed to step S404.

In step S404, the set top box receives the message sent by the MS Gateway, and the Set Top Box (STB) displays the message received from the MS Gateway; during the display, the message can be displayed in different ways according to different message types.

In step S405, if the TMMS judges that the set top box is not in the power-on state, which indicates that the user is not online currently, the TMMS inquires about the information of the STB user (acquired from a terminal information system), judges whether the STB user has other terminal binding services, if not, it is to proceed to step S406, and if yes, it is to proceed to step S407.

In step S406, when judging that the STB user does not have other terminal binding functions, the TMMS informs the MS Gateway to send an offline mail to the STB user.

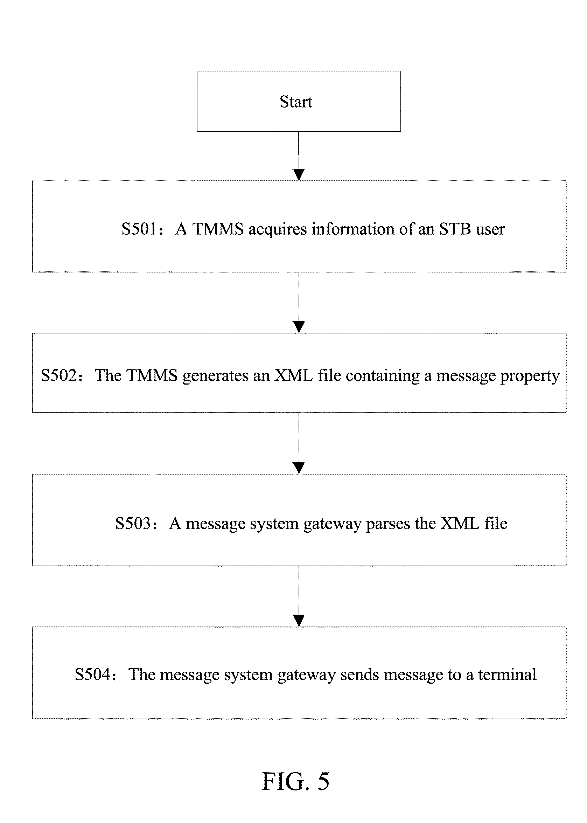

In step S407, when judging that the STB user has other terminal binding functions, the TMMS sends the message to the MS Gateway, and a specific interaction process between the TMMS and MS Gateway will be described specifically in FIG. 5.

In step S408, the MS Gateway sends the message to the other terminals bound to the STB user, and the message made by the system are displayed on the other terminals.

As shown in FIG. 5, a message interaction flow between the Terminal Management System (TMMS) and MS Gateway is displayed, and following steps are included.

In step S501, when the Terminal Management System (TMMS) does not receives a response that a user is online, that is, when it is judged that a user set top box is power off, the MS Gateway acquires detail information of the user from the terminal management system, and the detail information of the user includes: a user ID and other terminal numbers and so on.

In step S502, the TMMS processes the detail information of the user after receiving the detail information of the user, and generates an xml file (i.e. a webpage file) containing a message property.

In step S503, the MS Gateway receives the xml file containing the message property generated according to the detail information of the user from the TMMS.

In step S504, the MS Gateway parses the received message, and sends the received message to the other terminals bound to the user. During the parsing, the webpage file can be parsed to acquire the user ID and terminal numbers, and the message can be sent to the bound terminals corresponding to the user according to the terminal numbers.

In the existing IPTV system, it is limited to that the message can be sent, received and saved only when all set top boxes of the user side are in the power-on state, and all the existing message mechanisms are based on the set top box, thus the problem of insufficient expansibility and instantaneity exists. With the method and system for transmitting message of the IPTV of the present invention, when a management side or a user side interacts with its application/users, instant message sending between the system and user can be implemented by binding a set top box mailbox and cellphone/other terminals to the set top box user. In the present invention, service and function expansion is performed on aspects of message sources and receiving terminals and so on, and services of the IPTV system are enriched.

The above description is only the examples of the present invention, which is not used to limit the present invention. The present invention can have various modifications and changes for the skilled in the art. All the modifications, equivalent substitutions, and improvements, etc. made within the spirit and principle of the present invention shall fall into the scope of the claims of the present invention.

### Industrial Applicability

With the method and system for implementing message services of the IPTV of the present invention, when a management side or a user side interacts with its application/users, instant message sending between the system and user can be implemented by binding a set top box mailbox and cellphone/other terminals to the set top box user. In the present invention, service and function expansion is performed on aspects of message sources and receiving terminals and so on, and services of the IPTV system are enriched.

## Claims

1. A system for implementing message services of an interactive Internet Protocol television (IPTV), comprising: an IPTV system and one or more external network element systems, a set top box, one or more receiving terminals bound to a set top box user, and an IPTV message system, wherein:
the IPTV message system is configured to: receive message from the IPTV system and/or external network element system, and according to user information and whether the set top box user is in a power-on state, forward the received message to the set top box corresponding to the user information or the receiving terminal bound to the set top box user.

2. The system according to claim 1, wherein, the external network element system is an emergency notification system, an interactive application system, an advertisement system or a TVMail system.

3. The system according to claim 1, wherein, the receiving terminal bound to the set top box user is a personal computer or a cellphone.

4. The system according to claim 1, wherein, the IPTV message system comprises:
a message system management system, configured to: designate a message policy and release a time policy, receive the message from the IPTV system and/or external network element system, complete a formation of primitive property and content information of the message, and define a message sending interface and a message file format;
a message system server, configured to: receive, parse and execute a message task from the message system management system, and generate a webpage file containing a message property to send to a message system gateway;
the message system gateway, configured to: receive the message parsed by the message system server, and according to the message property and a sending rule, respond to a message display request of the set top box or the terminal bound to the user;
a web server, configured to: acquire a message display page file from the message system server synchronously, and when the set top box or terminal bound to the user requests for a message display, complete the display of a user message page; and
a terminal management system, configured to: after the message system management system releases the message, send address information of the message system gateway to the set top box, judge whether the set top box is in the power-on state, and according to a judging result, control the message system gateway to send the message to the set top box or other terminals bound to the user.

5. The system according to claim 4, wherein,
the message system management system is configured to: by sending a message sending notification to the message system server, indicate the message system server to send the message, and the message sending notification includes a message name, a sending time, a failure time and a resource file.

6. The system according to claim 4, wherein,
the message system server is further configured to: according to results of parsing the message, send display time and display location information of newly created message to the message system gateway.

7. The system according to claim 4, wherein,
the terminal management system is further configured to: when judging whether the set top box is in the power-on state:
if the set top box is in the power-on state is judged, request the message system gateway for acquiring the message, wherein the message system gateway retrieves and sends all message conforming to the set top box to the set top box, and the set top box displays the message received from the message system gateway;
if the set top box is not in the power-on state is judged, further judge whether the set top box user has other terminal binding services, wherein, if it is judged that the set top box user has no other terminal binding service, the message system gateway sends an offline mail to the set top box user; if it is judged that the set top box user has other terminal binding services, the terminal management system sends request message to the message system gateway, the message system gateway sends the message to the other terminals bound to the set top box user, and the message made by the system is displayed on the other terminals.

8. The system according to claim 7, wherein,
the terminal management system is further configured to: when determining that the set top box user is power off and bound with other terminals, acquire detail information of the set top box user, wherein the detail information of the user includes: a user ID and other terminal numbers;
the terminal management system is configured to: after acquiring the detail information of the user, process the detail information of the user, and generate the webpage file containing the message property; and
the message system gateway is further configured to: receive the webpage file containing the message property generated according to the detail information of the user from the terminal management system, parse the received message and send the received message to the other terminals bound to the user.

9. A method for implementing message services of an interactive Internet Protocol television (IPTV), comprising:
an IPTV message system receiving message from an IPTV system and/or an external network element system, and forwarding the received message to a set top box corresponding to the user information or a receiving terminal bound to the set top box user according to user information and whether a set top box user is in a power-on state.

10. The method according to claim 9, wherein,
the external network element system is an emergency notification system, an interactive application system, an advertisement system or a TVMail system;
the receiving terminal bound to the set top box user is a personal computer or a cellphone.

11. The method according to claim 9, wherein,
the step of the IPTV message system forwarding the received message to a set top box corresponding to the user information or a receiving terminal bound to the set top box user according to user information and whether a set top box user is in a power-on state comprises:
judging whether the set top box is in the power-on state, and if the set top box is in the power-on state, retrieving and sending all message conforming to the set top box to the set top box;
if the set top box is not in the power-on state, judging whether the set top box user has other terminal binding services, if not, sending an offline mail to the set top box user; if yes, sending the message to the other terminals bound to the set top box user, and displaying the message made by the system on the other terminals.

12. The method according to claim 11, wherein, when a terminal management system determines that the set top box user is power off and bound with other terminals, the method further comprises:
acquiring detail information of the set top box user, wherein, the detail information of the user includes: a user ID and other terminal numbers; and informing a message system gateway of the detail information of the user, and the message system gateway sending the message to the other terminals corresponding to the other terminal numbers in the detail information of the user.

13. An interactive Internet Protocol television (IPTV) message system, configured to:
receive message from an IPTV system and/or an external network element system, and according to user information and whether a set top box user is in a power-on state, forward the received message to a set top box corresponding to the user information or a receiving terminal bound to the set top box user.

14. The IPTV message system according to claim 13, wherein, the IPTV message system comprises:
a message system management system, configured to: designate a message policy and release a time policy, receive the message from the IPTV system and/or external network element system, complete a formation of primitive property and content information of the message, and define a message sending interface and a message file format;
a message system server, configured to: receive, parse and execute a message task from the message system management system, and generate a webpage file containing a message property to send to a message system gateway;
the message system gateway, configured to: receive the message parsed by the message system server, and according to the message property and a sending rule, respond to a message display request of the set top box or the terminal bound to the user;
a web server, configured to: acquire a message display page file from the message system server synchronously, and when the set top box or terminal bound to the user requests for message display, complete the display of a user message page; and
a terminal management system, configured to: after the message system management system releases the message, send address information of the message system gateway to the set top box, judge whether the set top box is in the power-on state, and according to a judging result, control the message system gateway to send the message to the set top box or other terminals bound to the user.

15. The IPTV message system according to claim 14, wherein, the message system management system is configured to: by sending a message sending notification to the message system server, indicate the message system server to send the message, wherein the message sending notification includes a message name, a sending time, a failure time and a resource file.

16. The IPTV message system according to claim 14, wherein, the message system server is further configured to: according to results of parsing the message, send display time and display location information of newly created message to the message system gateway.

17. The IPTV message system according to claim 14, wherein, the terminal management system is further configured to: when judging whether the set top box is in the power-on state:
if the set top box is in the power-on state is judged, request the message system gateway for acquiring the message, wherein the message system gateway retrieves and sends all message conforming to the set top box to the set top box; the set top box displays the message received from the message system gateway;
if the set top box is not in the power-on state is judged, further judge whether the set top box user has the other terminal binding services, wherein, if it is judged that the set top box user has no other terminal binding service, the message system gateway sends an offline mail to the set top box user; if it is judged that the set top box user has other terminal binding services, the terminal management system sends a request message to the message system gateway, the message system gateway sends the message to the other terminals bound to the set top box user, and the message made by the system is displayed on the other terminals.

18. The IPTV message system according to claim 17, wherein, the terminal management system is further configured to: when determining that the set top box user is power off and bound with other terminals, acquire detail information of the set top box user, wherein the detail information of the user includes: a user ID and other terminal numbers;
the terminal management system is configured to: after acquiring the detail information of the user, process the detail information of the user, and generate the webpage file containing the message property; and
the message system gateway is further configured to: receive the webpage file containing the message property generated according to the detail information of the user from the terminal management system, parse the received message and send the received message to the other terminals bound to the user.
